# EUROPÄISCHE PATENTSCHRIFT

(11) **EP 1 369 297 B1**
(45) Veröffentlichungstag und Bekanntmachung des Hinweises auf die Patenterteilung: **24.11.2004**
(21) Anmeldenummer: 03006973.6
(22) Anmeldetag: 27.03.2003
(51) Int. Cl.: B60N 2/427, B62D 21/15, B62D 21/14

(54) **Kraftfahrzeug und Verfahren zur Reduzierung der Belastung von Insassen eines Kraftfahrzeugs bei einem Zusammenstoss mit einem Hindernis**
Vehicle and method for reducing the impact on a vehicle occupant during collision
Véhicule automobile et procédé pour reduire le choc sur un voyageur en cas de collision

(30) Priorität: 05.06.2002 DE 10224831
(43) Veröffentlichungstag der Anmeldung: 10.12.2003
(73) Patentinhaber: Benteler Automobiltechnik GmbH, 33104 Paderborn (DE)
(72) Erfinder: Fischer, Jochem, 73760 Ostfildern (DE); Härtel, Wulf, 33184 Altenbeken (DE); Schröter, Martin, 33613 Bielefeld (DE); Kordisch, Thomas, Dr., 33739 Bielefeld (DE)
(74) Vertreter: Griepenstroh, Jörg

(56) Entgegenhaltungen:
- EP-A- 1 016 567
- DE-A- 4 233 155
- DE-A- 19 541 607
- US-A- 3 806 191
- US-A- 3 992 046
- US-B1- 6 193 296

## Beschreibung

Der gegenständliche Teil der Erfindung betrifft ein Kraftfahrzeug mit den Merkmalen des Oberbegriffs des Patentanspruchs 1.

Die gattungsbildende EP-A-1 016 567 zeigt ein kraftfahrzeug, bei dem bei einem Unfall eine bewegliche innere Bodenplatte gegenüber einer starren äußeren Bodenplatte beweglich ist.

Ferner betrifft die Erfindung ein Verfahren zur Reduzierung der Belastung von Insassen eines Kraftfahrzeugs bei einem Zusammenstoß mit einem Hindernis.

Zur Erzielung von niedrigen Belastungswerten für Insassen eines Kraftfahrzeugs ist es notwendig, die bei einem Aufprall auf ein Hindernis entstehenden Verzögerungswerte der Insassen auf ein erträgliches Maß zu reduzieren. Aktive sowie passive Sicherheitsmaßnahmen tragen dazu bei, dieses Ziel sowohl bei der Kollision zweier Kraftfahrzeuge als auch für andere Unfallsituationen zu erreichen.

Im Stand der Technik sind eine Vielzahl aktiver und passiver Sicherheitssysteme zum Schutz von Insassen eines Kraftfahrzeuges bekannt. Hierzu zählen beispielsweise Gurtsysteme. Als aktive Sicherheitskomponenten sind beispielsweise Gurtstraffsysteme und auch Airbags zu nennen. Nachteilig an diesen Systemen ist, dass nicht die bei einem Aufprall am Insassen angreifende Verzögerung nicht als solche kompensiert wird, sondern dass die Insassen durch Rückhaltesysteme nur vor einem Aufprall auf das Armaturenbrett bzw. vor dem Herausschleudern aus dem Kraftfahrzeug geschützt werden.

Die DE 4 233 155 A1 beschreibt eine Sicherheitseinrichtung für Fahrzeuge als Aufprallschutz für Insassen und Lasten, bei welcher im Falle einer Kollision entsprechende Energien zur Auslösung einer Ausgleichsbeschleunigung innerhalb eines Dämpfungsausgleichswegs herangezogen werden, wobei die Bewegungs-Gegenbewegungsstrecken gleich oder nahezu gleich sind. Die US 3 992 046 A beschreibt eine Sicherheitseinrichtung für Kraftfahrzeuge, die mit einem gegenüber dem Fahrzeugaufbau relativ beweglich ausgebildetem Sitz zusammenwirkt. Diese Sicherheitseinrichtung bewegtt während eines Aufprallunfalls den ein Rückhaltesystem umfassenden Sitz mittels einer Betätigungsvorrichtung entgegen der Fahrtrichtung bzw. in Fahrtrichtung, so dass die Sitzvergrößerung im Rahmen des menschlichen Erträglichkeitsbereiches schnell ansteigt und auf einem in diesem Rahmen liegenden im Wesentlichen konstanten Niveau gehalten wird. Die Betätigungsvorrichtung wird durch einen druckgesteuerten Zylinder gebildet. Die US6 193 296 B1 offenbart ein Fahrzeuginsassenschutzsystem mit einem Sitz, der an der Fahrzeugkarosserie in Richtung einer entgegenwirkenden Aufprallkraft verschiebbar ist. Ein erster Aktuator dient zum Beschleunigen des Sitzes in dieselbe Richtung wie die Aufprallkraft nach Erfassung des Fahrzeugaufpralls. Ein zweiter Aktuator dient zum Beschleunigen des Sitzes in eine der Aufprallkraft entgegengesetzte Richtung mit vorbestimmter Zeitverzögerung. Im Falle eines Fahrzeugaufpralls oder anderen Situation mit starker Verzögerung wird der Sitz beim Auftreten eines Aufpralls durch den ersten Aktuator nach hinten beschleunigt, so dass die Haltefähigkeit des Sicherheitsgurtes verbessert wird, indem in einer Frühphase des Fahrzeugaufpralls der Sitz stärker verzögert wird als die Fahrzeugkarosserie. Danach wird der Sitz durch den zweiten Aktuator in die entgegengesetzte Richtung beschleunigt, so dass die auf den Fahrzeuginsassen während des Fahrzeugaufpralls nach vorne wirkende Trägheitskraft aufgehoben wird, und eine Angleichung der Verzögerungen der Fahrzeugkarosserie, des Sitzes und des Fahrzeuginsassen in einer frühen Stufe des Aufpralls erreicht wird.

Der Erfindung liegt daher die Aufgabe zugrunde, eine weitere Möglichkeit zur Reduzierung der Belastung von Insassen bei einem Zusammenstoß eines Kraftfahrzeugs mit einem Hindernis aufzuzeigen sowie ein geeignetes Verfahren, mit welchem die Insassen geschützt werden können.

Die Erfindung löst den gegenständlichen Teil dieser Aufgabe durch die Merkmale des Patentanspruchs 1.

Eine neue Möglichkeit, Belastungen eines Insassen bei einem Unfall zu vermeiden, ist nach den Merkmalen des Patentanspruchs 1 dadurch gegeben, dass der Fahrzeugboden eines Kraftfahrzeugs bei einem detektierten Aufprall und/oder unmittelbar vor einem zu erwartenden Aufprall in vorbestimmten Längenabschnitten den Fußraum der Insassen vergrößernd, sensorisch aktiviert in Fahrtrichtung um ein Streckmaß auseinander fahrbar ist. Hierdurch wird dem Umstand Rechnung getragen, dass insbesondere im Fußraum ein nicht unerhebliches Verletzungsrisiko für die unteren Extremitäten der Insassen besteht, und zwar durch die im Bereich des Fahrzeugführers angeordneten Pedale, aber auch durch Verschiebungen der Karosserie, die zu einer Verkürzung des Fußraums führen können. Es ist daher beabsichtigt, dass der Fahrzeugboden in diskreten Längenabschnitten um ein Streckmaß auseinander fahrbar gestaltet ist. Ein auf diese Weise vergrößerter Fußraum trägt dazu bei, dass bei einem Frontalaufprall der Abstand zwischen dem Unterschenkel des Insassen und den Aufprall begrenzenden Einbauten in der Fahrgastzelle vergrößert ist, so dass es bei einer verzögerungsbedingten Verlagerung des Insassen in Richtung zum Armaturenbrett bzw. in Richtung auf den Vordermann nicht unmittelbar zu Stauchungen im Fußraum kommt.

Die Merkmale des Patentanspruchs 1 sind insbesondere bei einem gemäß den Merkmalen des Patentanspruchs 2 ausgestalteten Kraftfahrzeug von Vorteil. Wird bei einem Unfall der Sitz entgegen der durch den Aufprall eingeleiteten Beschleunigungsrichtung verlagert, das heißt in der Regel in Richtung des Frontendes des Kraftfahrzeugs, würde hiermit eine Verkleinerung des Fußraums einhergehen. Durch die Merkmale des Patentanspruchs 1 wird diese Verkleinerung zumindest teilweise kompensiert, so dass das Verletzungsrisiko im Fußraum nicht durch Platzmangel erhöht wird, gleichzeitig aber die an einem Insassen angreifenden Beschleunigungskräfte reduziert werden.

Wesentliches Prinzip der Erfindung gemäß Anspruch 2 ist, dass die bei einem Aufprall eines Kraftfahrzeugs an einem Insassen entgegen der Fahrtrichtung angreifenden negativen Beschleunigungswerte bzw. Verzögerungen durch eine entgegen gerichtete Verlagerung des Fahrzeugsitzes zumindest teilweise kompensierbar sind. Hierzu erfasst die an dem Kraftfahrzeug vorgesehene Sensorik in Form einer Kontaktsensorik und/oder einer Precrashsensorik einen unmittelbaren oder einen unmittelbar bevorstehenden Aufprall eines Kraftfahrzeugs auf ein Hindernis. Diese von der Sensorik erfassten Daten werden an eine Recheneinheit weitergeleitet, die wiederum mit einer Steuereinheit gekoppelt ist. In der Recheneinheit wird die am Kraftfahrzeug und damit die auch am Sitz eines Insassen anliegende Verzögerung berechnet. Sobald diese Verzögerung einen vorgebbaren Grenzwert überschreitet, werden von einer Steuereinheit Stellelemente aktiviert, die entgegen der am Fahrzeugsitz angreifenden Beschleunigungsrichtung den Fahrzeugsitz von einer Ruheposition in eine Aufprallposition verlagern. Der Zeitpunkt, wann der Sitz von der Ruheposition in die Aufprallposition verlagert wird, ist auf die am Kraftfahrzeug angreifenden Beschleunigungen abgestimmt, ebenso wie die Beschleunigungsrichtung. Hierdurch wird berücksichtigt, dass ein Aufprall auf ein Hindernis in der überwiegenden Zahl der Fälle bei Vorwärtsfahrt eines Kraftfahrzeugs erfolgt. Grundsätzlich ist es aber auch möglich, dass bei zügiger Rückwärtsfahrt oder auch bei einem Auffahrunfall Kollisionen im Heckbereich des Kraftfahrzeugs zu starken Beschleunigungen der Insassen führen. Der am Kraftfahrzeug angreifende Beschleunigungsvektor zeigt bei diesem Fall in Richtung zur Fahrzeugfront.

Zur Kompensation der Beschleunigung muss der Sitz des Insassen in diesem Fall entgegen der durch den Aufprall eingeleiteten Beschleunigungsrichtung, das heißt in Richtung zur Vorderseite des Fahrzeugs verlagert werden.

Die in der vorbeschriebenen Weise verlagerbaren Sitze können sowohl als Vordersitze als auch als Sitze im Fond eines Kraftfahrzeugs vorgesehen sein. Als Sitz im Sinne der Erfindung ist auch eine Sitzreihe oder mehrere miteinander verbundene Einzelsitze zu verstehen. Die Erfindung ist auch nicht auf Kraftfahrzeuge mit nur einer oder zwei hintereinander angeordneter Sitzreihen beschränkt. Die Stellelemente zur Verlagerung eines Sitzes können entweder im Sitz selbst untergebracht sein oder aber an den Sitz halternden Führungsschienen.

Nach den Merkmalen des Patentanspruchs 3 ist vorgesehen, dass die auseinander fahrbaren Längenabschnitte des Fahrzeugbodens von sensorisch aktivierten Stellelementen freigebbar sind und durch differenzierte Bremskräfte zwischen einer Vorderachse und Hinterachse des Kraftfahrzeugs den Fahrzeugboden auseinander fahrende Zugkräfte aufgebracht werden. Die Stelielemente tragen bei dieser Ausführungsform also nicht aktiv zum Auseinanderfahren des Fahrzeugbodens bei, sondern fungieren als Verriegelungselemente, wobei die eigentlichen Zugkräfte aus der kinetischen Energie des Kraftfahrzeugs selbst gewonnen sind. Dies gelingt dadurch, dass an der Hinterachse eine größere Bremswirkung anliegt als an der Vorderachse. Die sich hieraus ergebende Kräftedifferenz wird dazu genutzt, den Fahrzeugboden des Kraftfahrzeugs auseinander zu fahren.

Es ist vorstellbar, dass über getriebetechnische Mittel eine durch den Aufprall angreifende Kraft gezielt in auseinanderfahrbare Längenabschnitte des Fahrzeugbodens eingeleitet wird, so dass auf diese Weise der Fußraum eines Insassen vergrößerbar ist.

Grundsätzlich ist es aber auch möglich, dass dem Fahrzeugboden Stellelemente zugeordnet sind, welche die zum Auseinanderfahren des Fahrzeugbodens erforderlichen Stellkräfte selbsttätig generieren (Anspruch 4). Die Stellelemente können beispielsweise hydraulischer, pneumatischer, elektrischer oder pyrotechnischer Natur sein.

In der Ausgestaltung nach den Merkmalen des Patentanspruchs 5 ist an einen Sitz führenden Sitzschienen ein bei einem Aufprall des Kraftfahrzeugs freigebbares Sperrelement vorgesehen. Dieses Sperrelement hat im normalen Fahrbetrieb die Funktion eines Anschlags, um den Bereich, in welchem ein handelsüblicher Kraftfahrzeugsitz verschiebbar ist zu begrenzen. Erst bei einem Aufprall wird das Sperrelement freigegeben, wodurch der Sitz über einen größeren Längenbereich verfahrbar ist. An dem Sperrelement kann zusätzlich ein Dämpfungsglied vorgesehen sein, das den Anprall des Sitzes an dem Sperrelement dämpft.

Die Freigabe des Sperrelements kann entweder selbsttätig bei Überschreiten eines bestimmten von dem Sitz ausgeübten Impulses oder bei Überschreiten einer bestimmten Beschleunigung erfolgen. Es ist aber auch möglich, dass dem Sperrelement separate Stellelemente zugeordnet sind, die bei ihrer Aktivierung das Sperrelement aktiv freigeben.

Der verfahrensmäßige Teil der Aufgabe wird durch die Maßnahmen des Patentanspruchs 6 gelöst, der sich auf die Maßnahme bezieht, dass ein Fahrzeugboden in Fahrtrichtung bei einem Aufprall derart auseinander gezogen wird, dass sich der Fußraum für einen Insassen vergrößert.

Die Kombination dieser Maßnahme mit dem grundlegenden Prinzip der Verlagerung des Sitzes entgegen der Beschleunigungsrichtung der Karosserie ist Gegenstand des Patentanspruchs 7.

Nach Patentanspruch 8 wird das bereits zuvor beschriebene Sperrelement bei einem Zusammenstoß des Kraftfahrzeugs mit einem Hindernis freigegeben, wobei die Freigabe nach Patentanspruch 9 bei Überschreiten einer vorgegebenen Beschleunigung selbsttätig erfolgt.

Nachfolgend wird die Erfindung anhand eines in zwei schematischen Figuren dargestellten Ausführungsbeispiels näher erläutert. Es zeigen:
- Figur 1: in vereinfachter Darstellung in der Seitenansicht eine Fahrgastzelle eines Kraftfahrzeugs und
- Figur 2: die Fahrgastzelle der Figur 1 mit auseinander gezogenem Fahrzeugboden und verlagerten Sitzen.

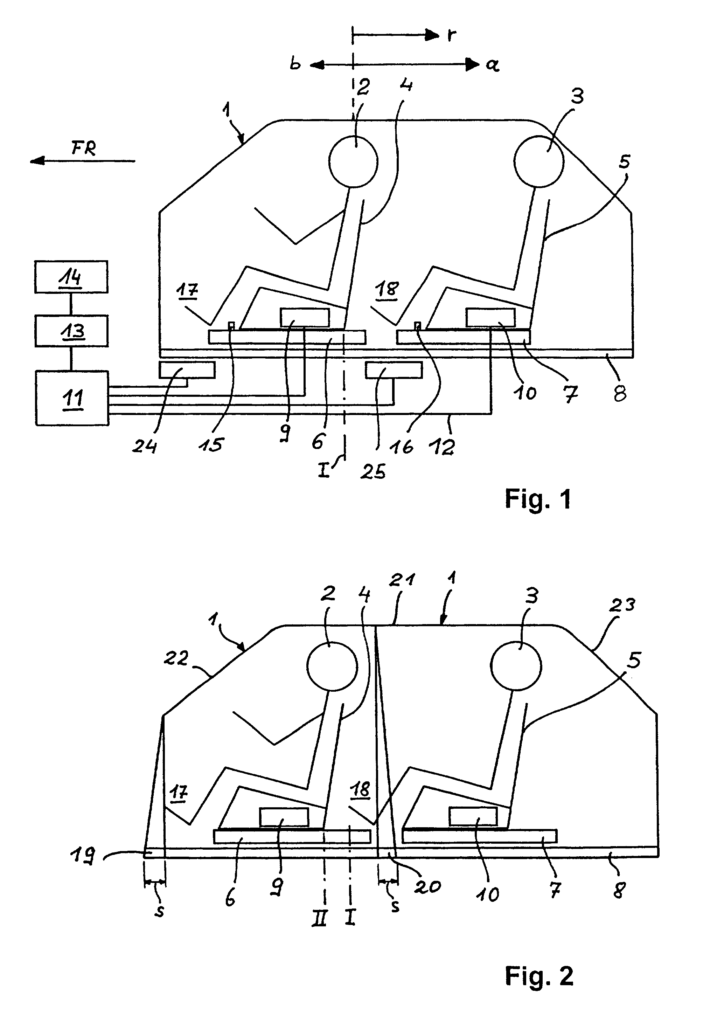

Mit 1 ist in den Figuren 1 und 2 eine Fahrgastzelle eines nicht näher dargestellten Kraftfahrzeugs bezeichnet. In der Fahrgastzelle befinden sich zwei Insassen 2, 3 auf in Fahrtrichtung FR hintereinander angeordneten Sitzen 4, 5. Die Sitze 4, 5 sind in Fahrtrichtung FR linear verschieblich auf Sitzschienen 6, 7 lagefixierbar, die wiederum an dem Fahrzeugboden 8 befestigt sind. Jedem Sitz 4, 5 ist ein Stellelement 9, 10 zugeordnet, über welches die Sitze 4, 5 in Richtung der Sitzschienen 6, 7 verschoben werden können. Die Stellelemente 9, 10 sind mit einer Steuereinheit 11 über Steuerleitungen 12 verbunden. Der Steuereinheit 11 ist eine Recheneinheit 13 vorgeschaltet, welche Signale einer Sensorik 14 erfasst und auswertet. Die Sensorik 14, beispielsweise in Form von Kontaktsensoren oder Precrashsensoren, detektiert einen Aufprall des Kraftfahrzeugs auf ein ortsfestes oder bewegliches Hindernis.

Wird nun von den Sensoren eine an der Karosserie, insbesondere der Fahrgastzelle 1 des Kraftfahrzeugs angreifende Beschleunigung a detektiert, steuert die Steuereinheit 11 die Stellelemente 9, 10 in den Sitzen 4, 5 an, wodurch die Sitze von der in Figur 1 gezeigten Ruheposition 1 in die in Figur 2 dargestellte Aufprallposition II in Fahrtrichtung FR und entgegen der durch den Aufprall eingeleiteten Beschleunigungsrichtung a verlagert werden. Hierbei werden die Sitze 4, 5 über ein an den Sitzschienen 6, 7 angeordnetes Sperrelement 15, 16 hinweg in Fahrtrichtung FR verschoben. Die Verlagerung der Sitze 4, 5 von der Ruheposition I in die Aufprallposition II erfolgt zeitgleich zu der durch den Aufprall eingeleiteten Beschleunigung a. Die Verlagerung der Sitze 4, 5 erfolgt dabei ebenfalls beschleunigt, wobei der Beschleunigungssektor b entgegengesetzt zum Beschleunigungsvektor a der Fahrgastzelle 1 orientiert ist. Im Ergebnis ist die am Fahrzeugsitz 4, 5 und damit am Insassen 2, 3 angreifende resultierende Beschleunigung r kleiner als die ursprüngliche Beschleunigung a der Karosserie.

Durch die Verlagerung der Sitze 4, 5 in Richtung zur Aufprallposition II wird der Fußraum 17, 18 verkleinert. Zur Kompensierung des Raumverlustes im Fußraum 17, 18 ist der Fahrzeugboden 8 in Fahrtrichtung FR auseinanderfahrbar ausgestaltet. Figur 2 zeigt hierbei, wie der Fahrzeugboden 8 in den vorbestimmten Längenabschnitten 19, 20 um ein Streckmaß s auseinander gezogen ist. Das Streckmaß s wird hierbei nur am Fahrzeugboden 8 gemessen. Im Bereich der nicht näher dargestellten Türen sind geeignete Mechanismen vorsehbar, die eine Streckung des Fahrzeugbodens 8 erlauben. Das Fahrzeugdach 21 bleibt in seiner Längserstreckung unverändert, ebenso wie die A-Säule 22 und C-Säule 23. Das Auseinanderfahren des Fahrzeugbodens 8 kann durch die in Figur 1 mit 24 und 25 bezeichneten Stellelemente bewirkt werden, die mit der Steuereinheit 11 gekoppelt sind. Die Stellelemente 24, 25 können mit Hilfsenergien die Längenabschnitte 19, 20 des Fahrzeugbodens 8 entweder aktiv auseinanderfahren oder lediglich als Entriegelung fungieren, wobei die zum Auseinanderfahren benötigten Kräfte aus der kinetischen Energie des Kraftfahrzeugs gewonnen werden.

### Bezugszeichenaufstellung

- 1 -: Fahrgastzelle
- 2 -: Insasse
- 3 -: Insasse
- 4 -: Sitz
- 5 -: Sitz
- 6 -: Sitzschiene v. 4
- 7 -: Sitzschiene v. 5
- 8 -: Fahrzeugboden
- 9 -: Stellelement v. 4
- 10 -: Stellelement v. 5
- 11 -: Steuereinheit
- 12 -: Steuerleitung
- 13 -: Recheneinheit
- 14 -: Sensorik
- 15 -: Sperrelement
- 16 -: Sperrelement
- 17 -: Fußraum
- 18 -: Fußraum
- 19 -: Längenabschnitt v. 8
- 20 -: Längenabschnitt v. 8
- 21 -: Fahrzeugdach
- 22 -: A-Säule
- 23 -: C-Säule
- 24 -: Stellelement
- 25 -: Stellelement

- a -: Beschleunigungsvektor v. 1
- b -: Beschleunigungsvektor v. 4
- r -: resultierender Beschleunigungsvektor

- s -: Streckmaß
- FR -: Fahrtrichtung
- I: - Ruheposition
- II -: Aufprallposition

## Patentansprüche

1. Kraftfahrzeug mit einer einen Aufprall detektierenden Sensorik (14), welche mit einer Stellelemente (24, 25) aktivierenden Steuereinheit (11) gekoppelt ist, **dadurch gekennzeichnet, dass** sein Fahrzeugboden (8) bei einem detektierten Aufprall und/oder unmittelbar vor einem zu erwartenden Aufprall des Kraftfahrzeugs in vorbestimmten Längenabschnitten (19, 20) um ein Streckmaß (s) in Fahrtrichtung (FR) den Fußraum (17, 18) der Insassen (2, 3) vergrößernd, sensorisch aktiviert auseinander fahrbar ist.

2. Kraftfahrzeug nach Anspruch 1, **dadurch gekennzeichnet, dass** einem Sitz (4, 5) eines Insassen (2, 3) des Kraftfahrzeugs Stellelemente (9, 10) zugeordnet sind, wobei der Sitz (4, 5) bei einem detektierten Aufprall des Kraftfahrzeugs von dem Stellelement (9, 10) entgegen der durch den Aufprall eingeleiteten Beschleunigungsrichtung (a) der Karosserie von einer Ruheposition (1) in eine Aufprallposition (II) verlagert wird.

3. Kraftfahrzeug nach Anspruch 1 oder 2, **dadurch gekennzeichnet, dass** die auseinanderfahrbaren Längenabschnitte (19, 20) des Fahrzeugbodens (8) von sensorisch aktivierten Stellelementen (24, 25) freigebbar sind und durch differenzierte Bremskräfte zwischen einer Vorderachse und Hinterachse des Kraftfahrzeugs den Fahrzeugboden (8) auseinanderfahrende Kräfte aufgebracht sind.

4. Kraftfahrzeug nach einem der Ansprüche 1 bis 3, **dadurch gekennzeichnet, dass** von den Stellelementen (24, 25) den Fahrzeugboden (8) auseinander fahrende Stellkräfte aufgebracht sind.

5. Kraftfahrzeug nach einem der Ansprüche 1 bis 4, **dadurch gekennzeichnet, dass** an einen Sitz (4, 5) führenden Sitzschienen (6, 7) ein bei einem Aufprall des Kraftfahrzeugs freigegebbares Sperrelement (15, 16) vorgesehen ist.

6. Verfahren zur Reduzierung der Belastung von Insassen eines Kraftfahrzeugs bei einem Zusammenstoß mit einem Hindernis, bei welchem mittels einer Sensorik (14) die Verzögerung der Karosserie (1) des Kraftfahrzeugs erfasst wird und ein in Fahrtrichtung (FR) streckbarer Fahrzeugboden (8) derart auseinandergezogen wird, dass der Fußraum für einen Insassen vergrößert wird.

7. Verfahren nach Anspruch 6, bei welchem der Sitz (4, 5) des Insassen (2, 3) entgegen der durch einen Aufprall eingeleiteten Beschleunigungsrichtung (a) der Karosserie (1) verlagert wird.

8. Verfahren nach Anspruch 6 oder 7, **dadurch gekennzeichnet, dass** an einen Sitz (4, 5) führenden Sitzschienen (6, 7) ein Sperrelement (15, 16) vorgesehen ist, welches bei einem Zusammenstoß des Kraftfahrzeugs mit einem Hindernis freigegeben wird.

9. Verfahren nach Anspruch 8, **dadurch gekennzeichnet, dass** das Sperrelement (15, 16) bei überschreiten einer vorgegebenen Beschleunigung selbsttätig freigegeben wird.

## Claims

1. Motor vehicle with an impact-detecting sensor system (14) which is coupled to a control unit (11) activating control elements (24, 25), **characterised in that**, in the event of a detected impact and/or immediately prior to an anticipated impact of the motor vehicle, its vehicle floor (8) in predetermined longitudinal sections (19, 20) is extensible by sensor activation, increasing the leg room (17, 18) of the occupants (2, 3) by an elongation measure (s) in the direction of travel (German abbreviation: FR).

2. Motor vehicle according to claim 1, **characterised in that** control elements (9, 10) are allocated to a seat (4, 5) of an occupant (2, 3) of the motor vehicle, the seat (4, 5) in the event of a detected impact of the motor vehicle being moved by the control element (9, 10) against the acceleration direction (a) of the body initiated by the impact from a rest position (I) to an impact position (II).

3. Motor vehicle according to claim 1 or 2, **characterised in that** the extensible longitudinal sections (19, 20) of the vehicle floor (8) are releasable by sensor-activated control elements (24, 25) and forces extending the vehicle floor (8) are applied through differentiated braking forces between a front axle and rear axle of the motor vehicle.

4. Motor vehicle according to one of claims 1 to 3, **characterised in that** actuating forces extending the, vehicle floor (8) are applied by the control elements (24, 25).

5. Motor vehicle according to one of claims 1 to 4, **characterised in that** on seat rails (6, 7) guiding a seat (4, 5) is provided a locking element (15, 16) releasable in the event of an impact of the motor vehicle.

6. Process for reducing the load on occupants of a motor vehicle in the event of a collision with an obstacle, wherein by means of a sensor system (14) the deceleration of the body (1) of the motor vehicle is detected and a vehicle floor (8) which is extensible in the direction of travel (FR) is extended in such a manner that the leg room for an occupant is increased.

7. Process according to claim 6, wherein the seat (4, 5) of the occupant (2, 3) is moved against the acceleration direction (a) of the body (1) initiated by an impact.

8. Process according to claim 6 or 7, **characterised in that** on seat rails (6, 7) guiding a seat (4, 5) is provided a locking element (15, 16) which is released in the event of a collision of the motor vehicle with an obstacle.

9. Process according to claim 8, **characterised in that** the locking element (15, 16) is automatically released when a given acceleration is exceeded.

## Revendications

1. Véhicule doté d'un système de détection de collision (14) lequel est couplé à une unité de commande (11) capable d'activer des actuateurs (24,25) **caractérisé en ce que**, lorsqu'une collision est détectée et /ou immédiatement avant une collision attendue, son plancher (8) peut, activé par des capteurs, s'allonger dans la direction de progression (FR) du véhicule, d'un allongement (s), au niveau de sections prédéfinies (19,20) qui s'éloignent les unes des autres, agrandissant ainsi l'espace (17,18) réservé aux jambes des passagers (2,3).

2. Véhicule selon la revendication 1, **caractérisé en ce que** des actuateurs (9,10) sont appliqués au siège (4,5) d'un passager (2,3) du véhicule, dans lequel, le siège (4,5), lorsqu'une collision du véhicule est détectée, est déplacé par l'actuateur (9,10), d'une position de repos (I) vers une position de collision (II), dans le sens opposé à l'accélération (a) de la carrosserie induite par la collision.

3. Véhicule selon la revendication 1 ou 2, **caractérisé en ce que** les sections (19,20) du plancher de véhicule (8), capables de s'éloigner les unes des autres sont libérables de l'action des actuateurs (24,25), activés par des capteurs, et que, à partir d'une différence de force de freinage entre les axes avant et arrière, des forces allongeant le plancher (8) sont appliquées.

4. Véhicule selon l'une des revendications 1 à 3, **caractérisé en ce que** les forces qui allongent le plancher (8) sont appliquées par les actuateurs (24,25).

5. Véhicule selon l'une des revendications 1 à 4, **caractérisé en ce que** sur des rails (6,7) qui guident le siège (4,5), un élément de blocage (15,16) déblocable lors d'un collision est prévu.

6. Procédé pour réduire l'exposition des passagers d'un véhicule lors d'une collision contre un obstacle, dans lequel, au moyen d'un système de détection (14), la décélération de la carrosserie (1) du véhicule est détectée et un plancher allongeable dans le sens de progression (FR) du véhicule est étiré de telle sorte que l'espace réservé aux jambes du passager s'agrandit.

7. Procédé selon la revendication 6, dans lequel le siège (4,5) du passager (2,3) est déplacé dans le sens opposé à l'accélération (a) de la carrosserie (1) induite par la collision.

8. Procédé selon la revendication 6 ou 7, **caractérisé en ce que** sur les rails (6,7) qui guident un siège (4,5), un élément de blocage (15,16) est prévu, lequel est débloqué lors d'une collision du véhicule contre un obstacle.

9. Procédé selon la revendication 8 **caractérisé en ce que** lorsqu'une certaine accélération est dépassée, l'élément de blocage (15,16) se débloque automatiquement.
